# NEUE EUROPÄISCHE PATENTSCHRIFT

(11) **EP 1 719 633 B2**
(45) Veröffentlichungstag und Bekanntmachung des Hinweises auf die Entscheidung über den Einspruch: **12.03.2014**
(45) Hinweis auf die Patenterteilung: 13.08.2008
(21) Anmeldenummer: 06007492.9
(22) Anmeldetag: 10.04.2006
(51) Int. Cl.: B41M 1/10, B41C 1/05

(54) **Verwendung von lasergravierten Druckformen**
Use of laser-engraved printing formes.
Utilisation de formes d'impression gravées par laser.

(30) Priorität: 03.05.2005 EP 05009671
(43) Veröffentlichungstag der Anmeldung: 08.11.2006
(73) Patentinhaber: Merck Patent GmbH, 64293 Darmstadt (DE)
(72) Erfinder: Becker, Andreas, 63329 Egelsbach (DE); Rathschlag, Thomas, 63762 Grossostheim (DE); Smolka, Rüdiger, 64673 Zwingenberg (DE); Sudhues, Edgar, 48683 Ahaus (DE)

(56) Entgegenhaltungen:
- EP-A- 0 960 915
- DE-A- 10 259 301
- DE-A1- 3 711 838
- DE-C2- 10 151 661
- JP-A- 2004 174 932
- PATENT ABSTRACTS OF JAPAN Bd. 2003, Nr. 12, 5. Dezember 2003 (2003-12-05) & JP 2004 167702 A (KYODO PRINTING CO LTD), 17. Juni 2004 (2004-06-17)
- FIRMA ECKART: '"UltraStar(R) GX-Serie, GX-2820 Silber"' TECHNISCHE PRODUKTINFORMATION April 2004, Seiten 1 - 2
- FIRMA ECKART: '"UltraStar(R) GX-Serie, GX-2827 Silber"' TECHNISCHE PRODUKTINFORMATION Februar 2005, Seiten 1 - 2
- FIRMA ECKART: '"RotoStar(R) aqua GP 02-Serie' TECHNISCHE PRODUKTINFORMATION Mai 2004, Seiten 1 - 2
- KIPPHAN, HELMUT: '"Handbuch der Printmedien"' SPRINGER VERLAG 2000, Seiten 49, 373 - 380
- OLLECH, B.: '"Tiefdruck"', 1999, POLYGRAPH FACHMEDIEN VERLAG Seiten 13 - 14
- KIPPHAN, H.: '"Handbuch der Printmedien"', 2000, SPRINGER VERLAG Seiten 437 - 441
- VAN RENESSE, R.L.: '"Optical Document Security, Second Edition"', 1998, ARTECH HOUSE Seiten 376 - 378
- VAN RENESSE, R.L.: '"Optical Document Security, Third Edition"', 2005, ARTECH HOUSE Seiten 231 - 235
- ZORLL, ULRICH: '"Römpp Lexikon Lacke und Druckfarben"', 1998, GEORG THIEME VERLAG, STUTTGART Seiten 176,269, - 374,377-378

## Beschreibung

Die vorliegende Erfindung betrifft die Verwendung von lasergravierten Druckformen zum Verdrucken von Druckfarben, welche mit plättchenförmigen Effektpigmenten pigmentiert sind, in einem Tiefdruckverfahren.

Tiefdruckverfahren eignen sich hervorragend zum Drucken von Drucksachen mit hohen Auflagen, die eine sehr gute Druckqualität erfordern, beispielsweise von Zeitschriften, Konsumgüterverpackungen, Versandhauskatalogen und dergleichen. Für ein wirtschaftliches Arbeiten ist eine hohe Auflage erforderlich, da die Herstellung der Druckform im Vergleich zu anderen Druckverfahren sehr teuer ist. Das Tiefdruckverfahren verlangt als Druckform ein Relief, bei welchem die zu druckenden Elemente vertieft sind. Die Druckform ist dabei entweder eine Druckplatte oder ein Druckzylinder, wobei letzterer bevorzugt ist, da sich damit hohe Druckgeschwindigkeiten erzielen lassen.

Traditionell bestehen Druckformen für den Tiefdruck aus Kupfer oder weisen eine Oberfläche aus Kupfer auf. Diese kann zusätzlich verchromt sein, so dass auch höhere Auflagen ohne Qualitätsverluste gedruckt werden können.

Ursprünglich wurden in die Kupferoberfläche mit Säuren Vertiefungen, so genannte Näpfchen, eingeätzt, welche in den meisten Fällen dem Spiegelbild des zukünftigen Druckbildes entsprechen. Diese Näpfchen nehmen die Druckfarbe auf und geben sie beim anschließenden Druckvorgang, bei dem die Druckform mechanisch an den Bedruckstoff gepresst wird, an den Bedruckstoff ab. Das Volumen der Näpfchen bestimmt dabei die Menge der auf den Bedruckstoff übertragenen Druckfarbe.
Die Ätzgravur ist eine teure Form der Herstellung der Druckform, die außerdem eine hohe Belastung des Umwelt mit sich bringt und nur mit einer vergleichsweise geringen Geschwindigkeit durchgeführt werden kann.

Die Ätzgravur wurde vor einiger Zeit von der elektronischen Gravur nahezu vollständig abgelöst. Hier wird das Druckbild über einen Computer elektronisch erfasst und über elektronisch gesteuerte Stichel in die Metalloberfläche eingraviert. Dieses Verfahren erlaubt eine schnelle, exakte und zuverlässige Herstellung der Druckformen und eine gute Wiederholbarkeit des Ergebnisses, wenn mehrere Druckformen graviert werden müssen. Da bei Druckzylindern die Gravur bei rotierendem Zylinder erfolgt, ist jedoch eine Variation der Näpfchendurchmesser oder Näpfchentiefe über den Umfang des Druckzylinders bei gleichzeitiger Veränderung der Rasterlinienweite nicht möglich, so dass gezielte Anpassungen an die Feinheiten eines Druckbildes zwar über die Breite des Zylinders, nicht jedoch über den Umfang des Zylinders möglich sind. Dadurch ist die Anwendbarkeit von elektronisch gravierten Druckzylindern hinsichtlich von zu erzielenden Druckbildern mit feinen Schattierungen und/oder feinen Drucklinien beschränkt.
Bedingt durch die Form des Stichels weisen die elektronisch gravierten Näpfchen Formen auf, die einer Pyramide mit variablen Kantenlängen entsprechen. Zur Verarbeitung der dünnflüssigen Druckfarben für den Tiefdruck, die organische Farbstoffe oder auch granulatförmige oder anders unregelmäßig geformte Farbpigmente enthalten, sind die elektronisch gravierten Druckformen gut geeignet.
Zum Verdrucken von Druckfarben, welche plättchenförmige Effektpigmente enthalten, eignen sich die elektronisch gravierten Druckformen jedoch nur bedingt. Mit zunehmender Partikelgröße der Pigmente sind mit diesen Druckformen aber keine befriedigenden Druckergebnisse erzielbar. Dies ist darauf zurückzuführen, dass durch Ablagerung der Partikel an den Seitenflächen der Näpfchen oder Verstopfungen an der Spitze der Pyramiden die Entleerungsgeschwindigkeit der Druckfarbe abgesenkt wird und die Effektpigmente oft im Näpfchen verbleiben und nicht auf den Bedruckstoff gelangen. Dies führt zu unschönen Auslassungen im Druckbild und Schwierigkeiten im Fortdruckverhalten der Druckformen.

Seit einigen Jahren sind auch per Laserbestrahlung gravierte Druckformen bekannt.
Bei der indirekten Lasergravur wird die Druckform, die eine metallische Oberfläche aufweist, in einem ersten Verfahrensschritt mit einer Kunststoffschicht, einer thermosensitiven Lackschicht oder einer Keramikschicht beschichtet, welche per Laser verdampfbare Materialien enthält. In diese Schicht wird dann mit Hilfe eines Laserstrahls das Druckmuster graviert. Anschließend wird durch Einbringen in ein Säurebad an den per Laser abgetragenen Stellen der Druckform die metallische Oberfläche geätzt. Dabei wird die Schicht, welche die metallische Oberfläche der Druckform umhüllt, entweder abgelöst oder verbleibt auf der Druckform. Mit Hilfe dieses Verfahrens kann das Gravierverfahren von Tiefdruckformen beschleunigt und präzisiert werden. Nachteilig ist jedoch die verbleibende Behandlung in einem Säurebad. Entsprechende Verfahren sind in der DE 195 07 827 und in der DE 196 12 100 beschrieben worden.

Neuerdings ist jedoch auch ein Verfahren bekannt, bei dem metallische Druckformen für das Tiefdruckverfahren direkt per Laserbestrahlung graviert werden. Dieses Verfahren ist sehr schnell und ermöglicht das Gravieren von flächen- und tiefenvariablen Näpfchen direkt in eine metallische Druckform für den Tiefdruck. Eine Beschreibung dieses Verfahrens ist in der WO 96/34718 und der EP 1 068 923 zu finden.

Es sind auch Verfahren bekannt, mit denen Druckformen, die eine Oberfläche aus Keramik aufweisen, direkt per Laserbestrahlung graviert werden, ohne dass anschließend die Druckform noch mit Säure ätzend nachbehandelt wird. In diesem Falle muss die Keramikschicht dick genug sein, um die gesamte Näpfchentiefe aufzunehmen. Eine geeignete Apparatur sowie ein Verfahren zur Herstellung solcher keramikbeschichteter Druckformen ist in der WO 92/09399 beschrieben.

Umfangreiche Untersuchungen, wie sich die oben beschriebenen per Laserbestrahlung indirekt oder direkt gravierten Näpfchen in Tiefdruckformen auf das Druckverhalten von mit plättchenförmigen Effektpigmenten pigmentierten Tiefdruckfarben auswirken, hat es bisher nicht gegeben.

DE 102 56 493 beschreibt eine thermisch aktivierbare Beschichtungszusammensetzung, welche siegelfähig ist und in einem Tiefdruckverfahren unter Verwendung eines Tiefdruckzylinders, welcher per Laser- oder Elektronenstrahlbebilderung und/oder -gravur mit Näpfchen versehen wurde, verdruckt wird.
Nach dem Aufbringen des Druckbildes per Laser wird der Druckzylinder geätzt. Die optischen Eigenschaften der thermisch aktivierbaren Schicht sind dabei durch verschiedene Farbstoffe oder Pigmente, unter anderem auch Effektpigmente, beeinflussbar. Gemäß dem Beispiel enthält die Beschichtungszusammensetzung jedoch nur eine geringe Menge an flüchtigen Lösemitteln und keine Pigmente oder Farbstoffe. Eine Anpassung der Näpfchenform, -größe und -verteilung auf dem Druckzylinder an die Art der zu verdruckenden Pigmente in der Beschichtungszusammensetzung wird nicht beschrieben.

In der DE 690 29 955 T2 wird eine Tiefdruckplatte offenbart, welche eine Anzahl von Näpfchengruppen auf der Basisfläche beschreibt, von denen jede neun Näpfchen enthält, welche jeweils in Dreiergruppen über- und untereinander angeordnet sind und zur Verbesserung des Fliessverhaltens der Druckfarbe jeweils gekerbte Abschnitte in den Näpfchenwänden enthalten, die das Ineinanderfließen der Druckfarbe zwischen den Näpfchen der Neunergruppe erleichtern sollen. Aufgabe dieser Erfindung war es, den Farbfluss in den Schattenabschnitten der Tiefdruckplatte zu verbessern. Die Art der Pigmentierung der Druckfarbe spielt hier keine Rolle. Die Näpfchen werden entweder geätzt oder über eine elektronische Gravur hergestellt.

In der JP-A-2004 167702 wird ein Tiefdruckverfahren und ein damit hergestelltes Druckerzeugnis beschrieben, wobei ein Kupferzylinder für die Herstellung der Tiefdruckform mit einem Muster versehen wird, bei dem zwei verschiedene Zonen voneinander verschiedene viereckige Näpfchenmuster aufweisen, die gegeneinander verdreht angeordnet sind. Das Rastermuster wird per Laserdrucker hergestellt und mittels einer Photomaske auf den Druckzylinder übertragen. Die Druckfarbe kann Perlglanzpigmente enthalten.

Aus der DE-A1-102 59 301 sind Interferenzpigmente auf der Basis von beschichteten plättchenförmigen Substraten und deren Verwendung in Druckfarben bekannt.

In der EP-A1-0 960 915 wird eine Pigmentzubereitung, im Wesentlichen bestehend aus einem Gemisch aus beschichteten und/ oder unbeschichteten SiO₂- Flakes und ein oder mehreren Effektpigmenten und einem Phosphatderviat, sowie deren Verwendung, insbesondere in Druckfarben, beschrieben.

Aufgabe der vorliegenden Erfindung war es, die Verwendung von per Laserbestrahlung gravierten Druckformen aufzuzeigen, welche sich für das Verdrucken von dünnflüssigen Druckfarben, die mit plättchenförmigen Effektpigmenten pigmentiert sind, in einem Tiefdruckverfahren besonders gut eignen und zur Ausbildung von scharfen, durchgängigen und sehr feinen Drucklinien, einer hohen Farbsättigung sowie deutlichen Schattierungen auf dem Bedruckstoff führen können, auch für Druckfarben mit vergleichsweise groben plättchenförmigen Pigmenten geeignet sind und wobei die Druckformen vorzugsweise keinem Ätzverfahren ausgesetzt werden.

Eine weitere Aufgabe bestand darin, ein Tiefdruckverfahren zur Verfügung zu stellen, bei welchem die vorab genannten Druckformen eingesetzt werden.

Die Aufgabe der vorliegenden Erfindung wird gelöst durch die Verwendung von Druckformen, welche aus einem flachen oder zylindrischen Körper mit einer metallischen oder keramischen Schicht bestehen, die Vertiefungen in Form von Näpfchen aufweist, welche per Lasergravur hergestellt sind, zum Verdrucken von Druckfarben, welche mit mindestens einem plättchenförmigen Effektpigment pigmentiert sind, in einem Tiefdruckverfahren, wobei die Näpfchen auf der metallischen oder keramischen Schicht der Druckform zumindest teilweise in Gruppen angeordnet sind, wobei die Druckfarbe ein Lösemittel, welches aus Wasser und/oder organischen Lösemittelgemischen besteht, in einer Menge von 35 Gew.-%, bezogen auf das Gesamtgewicht der Druckfarbe enthält, und wobei die Gruppen aus mindestens zwei und bis zu 9 Näpfchen bestehen.

Die Aufgabe der vorliegenden Erfindung wird auch durch ein Tiefdruckverfahren gelöst, bei welchem die Vertiefungen einer Druckform, welche aus einem flachen oder zylindrischen Körper mit einer metallischen oder keramischen Schicht besteht, die Vertiefungen in Form von Näpfchen aufweist, welche per Lasergravur hergestellt sind, mit einer Wasser und/oder ein organisches Lösemittel oder organisches Lösemittelgemisch in einer Menge von mindestens 35 Gew.-%, bezogen auf das Gesamtgewicht der Druckfarbe enthaltenden Druckfarbe befüllt und anschließend die überschüssige Farbe von der Oberfläche der Druckform entfernt wird, wonach die sich in den Näpfchen verbleibende Druckfarbe durch mechanisches Anpressen der Druckform an einen Bedruckstoff auf diesen übertragen und anschließend getrocknet und/oder ausgehärtet wird, wobei die Druckfarbe mindestens ein plättchenförmiges Effektpigment enthält und die Näpfchen auf der metallischen oder keramischen Schicht mindestens teilweise in Gruppen angeordnet sind, wobei die Gruppen aus mindestens zwei und bis zu neun Näpfchen bestehen

Die Druckformen, welche gemäß der vorliegenden Erfindung verwendet werden, bestehen aus einem flachen oder zylindrischen Körper mit einer metallischen oder keramischen Schicht, die Vertiefungen in Form von Näpfchen aufweist, welche per Lasergravur hergestellt sind.

Dabei handelt es sich entweder um Druckplatten oder um Druckzylinder. Diese weisen eine metallische oder keramische Schicht auf, in welcher sich die Näpfchen befinden.

In einer ersten Ausführungsform ist die metallische Schicht mit einer Kunststoffschicht, einer thermosensitiven Lackschicht oder einer Keramikschicht bedeckt, in welche das Druckmotiv über ein Laserverfahren eingraviert wird. Diese Gravur kann über ein thermisches oder ein nichtthermisches Verfahren erfolgen. Bei einem thermischen Verfahren wird die aufgebrachte Kunststoff-, Lack- oder Keramikschicht durch den Laserstrahl teilweise erhitzt und an den gewünschten Stellen über einen Schmelzprozess abgetragen. Dadurch kann es an den Rändern der Lasergravur aber zu unerwünschten Verschmelzungen kommen, die zu unscharf konturierten Rändern führen. Bevorzugt ist daher ein nicht-thermisches Lasergravurverfahren, bei dem die Leistung des Lasers so auf das abzutragende Material eingestellt wird, dass dieses ohne nennenswerte Verschmelzungen verdampft. Dies lässt sich unter Verwendung von einem UV-Excimer-Laser, einem frequenzverdoppelten Argon-Ionen-Laser, einem frequenzvervierfachten Neodym-YAG-Laser oder einem Infrarot-Neodym-YAG-Laser erreichen. Anschließend wird die metallische Schicht der Druckform, welche in der Regel aus Kupfer, Aluminium oder Stahl besteht, an den durch den Laser freigelegten Stellen in der darüber liegenden Kunststoff-, Lack-, oder Keramikschicht mittels einer Säure ätzend behandelt, so dass auf der metallischen Schicht Vertiefungen in Form von Näpfchen entstehen.
Bei der Ätzbehandlung wird die auf der metallischen Schicht der Druckform befindliche Schicht je nach Säurebeständigkeit des Materials entweder abgelöst (Kunststoff, Lack) oder beibehalten (Keramik). Die Druckform kann anschließend über übliche Reinigungs- und Polierverfahren, gegebenenfalls auch über einen anschließenden Verchromungsprozess, nachbehandelt werden, bevor sie in dem erfindungsgemäßen Tiefdruckverfahren eingesetzt wird. Diese Art der Lasergravur wird als indirekte Lasergravur bezeichnet.

Die Menge des abgetragenen Kunststoffs oder der Keramik bestimmt in diesem Verfahren, wie schnell die Säure bei der anschließenden Säurebehandlung in die Metallschicht der Druckform eindringen kann. Dadurch wird die Tiefe der Näpfchen und damit deren Volumen einstellbar. Der Durchmesser der Näpfchen ist selbstverständlich durch die eingestellte Laserleistung ebenfalls beeinflussbar. Mit dem Ätzverfahren können jedoch in der Regel nur kalottenförmige Näpfchenböden hergestellt werden.

Ebenso ist es nur sehr schwer möglich, innerhalb einer Näpfchengruppe verschiedene Näpfchentiefen zu erhalten.

Bevorzugt ist daher die zweite Ausführungsform der lasergravierten Druckformen. Hier werden die Näpfchen per Laser direkt in die metallische oder keramische Schicht der Druckform, die in diesem Falle die Oberfläche der Druckform bildet, graviert.

Bevorzugt bestehen die metallischen Schichten aus Zink oder geeigneten Zinklegierungen, da andere Metalle, wie beispielsweise das früher üblicherweise verwendete Kupfer, wegen seiner hohen Wärmeleitfähigkeit und seiner hohen Verdampfungsenthalpie nicht für eine direkte Bearbeitung per Laser geeignet sind.
Für metallische Oberflächen wird dieses Verfahren vorzugsweise gemäß den in WO 96/34718 und der EP 1 068 923 beschriebenen Verfahrensschritten ausgeführt.

Keramische Schichten bestehen bevorzugt aus Metallnitriden, Metallcarbiden, Metallcarbonitriden, Metalloxiden oder aus Gemischen daraus. Bevorzugt werden Titannitrid, Chromnitrid, Aluminiumoxid oder deren Gemische eingesetzt. Es sind jedoch auch andere geeignete keramische Materialien einsetzbar, welche sich per Laserbestrahlung gezielt schmelzen oder verdampfen lassen.
Ein geeignetes Verfahren ist in der WO 92/09399 beschrieben.

Die direkten Lasergravurverfahren weisen den Vorteil auf, dass sich damit auf eine sehr schnelle Weise und mit hoher Präzision lasergravierte Näpfchen herstellen lassen, die sowohl flächen- als auch tiefenvariabel hergestellt und mit verschiedenen Näpfchenbodenformen versehen werden können. Das eröffnet die Möglichkeit, alle Näpfchen, auch innerhalb einer Näpfchengruppe, in Bodenform, Tiefe und Durchmesser sowohl über die Breite als auch über die Länge der Druckform (bei Druckzylindern den Umfang) individuell auf das zu erzeugende Druckbild und die Art der in der Druckfarbe verwendeten plättchenförmigen Effektpigmente einzustellen.

Bei der direkten Lasergravur der Druckform entfällt außerdem die Säurebehandlung bei der Ätzung, was die Umweltverträglichkeit des Verfahrens positiv beeinflusst.
Auch die in der direkten Lasergravur gravierten Druckformen können den üblichen Nachbehandlungen wie Reinigung, Entfettung, Verchromung und Polieren unterzogen werden.

Die Druckfarben, welche gemäß der vorliegenden Erfindung eingesetzt werden, enthalten mindestens ein plättchenförmiges Effektpigment. Des weiteren enthalten die Druckfarben mindestens ein Lösemittel, welches aus Wasser und/oder organischen Lösemitteln oder aus organischen Lösemittelgemischen besteht.

Da die Druckfarben beim Tiefdruckverfahren eine vollständige Entleerung aus den Näpfchen sowie eine schnelle anschließende Trocknung erzielen müssen, weisen sie einen hohen Anteil an verdunstenden Lösemitteln auf. Dieser sollte eine Menge von 35 Gewichtsprozent, bezogen auf das Gesamtgewicht der druckfertigen Druckfarbe, nicht unterschreiten und kann bis zu 85 Gewichtsprozent, bezogen auf das Gesamtgewicht der druckfertigen Druckfarbe, betragen.

Als organische Lösemittel können alle in Tiefdruckverfahren üblicherweise verwendeten Lösemittel, beispielsweise verzweigte oder unverzweigte Alkohole, Aromaten oder Alkylester, wie Ethanol, 1-Methoxy-Propanol, 1-Ethoxy-2-propanol, Ethylacetat, Butylacetat, Toluol, etc., oder deren Gemische verwendet werden.

Als Bindemittel kommen ebenfalls übliche Bindemittel, insbesondere solche auf Nitrocellulosebasis, Polyamidbasis, Acrylbasis, Polyvinylbutyralbasis, PVC-Basis, PUR-Basis oder geeignete Gemische aus diesen, und Bindemittel auf UV-härtbarer Basis (radikalisch oder kationisch härtend) in Betracht.

Ebenso können der Tiefdruckfarbe gebräuchliche Additive wie Füllstoffe, weitere nicht plättchenförmige Farbpigmente oder Farbstoffe, UV-Stabilisatoren, Inhibitoren, Flammschutzmittel, Gleitmittel, Dispergiermittel, Redispergiermittel, Entschäumer, Verlaufsmittel, Filmbildner, Haftvermittler, Trocknungsbeschleuniger, Trocknungsverzögerer, Fotoinitiatoren etc. zugegeben werden.

Dabei wird der Feststoffgehalt der Druckfarbe je nach Drucktemperatur, Druckgeschwindigkeit und Art der Bindemittel, Additive und Art des Bedruckstoffes so eingestellt, dass die Viskosität der Druckfarbe ausreicht, um eine möglichst optimale Entleerung der Druckfarbe aus den Näpfchen zu erzielen. Diese Einstellung der Viskosität erfolgt direkt an der Druckmaschine und kann ohne erfindungsgemäßes Zutun beruhend auf den Angaben des Druckfarbenherstellers oder dem Fachwissen des Druckers ausgeführt werden. Die Bestimmung der Viskosität erfolgt in der Regel über die Ermittlung der Auslaufzeit bei Normtemperatur und bestimmter relativer Luftfeuchtigkeit in einem genormten Auslaufbecher.

Als Effektpigmente werden in der Druckfarbe beispielsweise Perlglanzpigmente, Interferenzpigmente, Metalleffektpigmente, Flüssigkristallpigmente (Liquid Crystal Pigments), strukturierte Pigmente (beispielsweise strukturierte Polymerplättchen oder strukturierte anorganische Plättchen, welche ggf. Beschichtungen aufweisen), oder Gemische aus diesen eingesetzt. Diese Effektpigmente sind aus einer oder mehreren Schichten aus gegebenenfalls unterschiedlichen Materialien aufgebaut und liegen plättchenförmig vor.

Bevorzugt weisen diese Pigmente einen plättchenförmigen Träger auf, welcher optional mindestens eine Beschichtung aus einem Metall, Metalloxid, Metalloxidhydrat oder deren Gemischen, einem Metallmischoxid, -suboxid, -oxinitrid, Metallfluorid oder einem Polymer umfasst.

Perlglanzpigmente bestehen aus transparenten Plättchen mit hoher Brechzahl und zeigen bei paralleler Orientierung durch Mehrfachreflexion einen charakteristischen Perlglanz. Solche Perlglanzpigmente, die zusätzlich auch Interferenzfarben zeigen, werden als Interferenzpigmente bezeichnet.

Obwohl natürlich auch klassische Perlglanzpigmente wie TiO₂-Plättchen, basisches Bleicarbonat, BiOCI-Pigmente oder Fischsilberpigmente prinzipiell geeignet sind, werden als Effektpigmente im Sinne der Erfindung vorzugsweise plättchenförmige Interferenzpigmente oder Metalleffektpigmente eingesetzt, welche auf einem plättchenförmigen Träger optional mindestens eine Beschichtung aus einem Metall, Metalloxid, Metalloxidhydrat oder deren Gemischen, einem Metallmischoxid, Metallsuboxid, Metalloxinitrid, Metallfluorid oder einem Polymer aufweisen.

Die Metalleffektpigmente weisen bevorzugt mindestens einen Metallträger oder eine Metallschicht auf.

Der plättchenförmige Träger besteht vorzugsweise aus natürlichem oder synthetischem Glimmer, Kaolin oder einem anderen Schichtsilikat, aus Glas, Calcium-Aluminium-Borosilikat, SiO₂, TiO₂, Al₂O₃, Fe₂O₃, Polymerplättchen, Graphitplättchen oder aus Metallplättchen, wie beispielsweise aus Aluminium, Titan, Bronze, Silber, Kupfer, Gold, Stahl oder diversen Metalllegierungen.

Besonders bevorzugt sind plättchenförmige Träger aus Glimmer, Glas, Calcium-Aluminium-Borosilikat, Graphit, SiO₂, Al₂O₃, oder aus Aluminium.

Die Größe des plättchenförmigen Trägers ist an sich nicht kritisch. Die Träger weisen in der Regel eine Dicke zwischen 0,01 und 5 µm, insbesondere zwischen 0,05 und 4,5 µm auf. Die Ausdehnung in der Länge bzw. Breite beträgt üblicherweise von 1 bis 500 µm, vorzugsweise von 1 bis 200 µm und insbesondere von 1 bis 125 µm. Sie besitzen in der Regel ein Aspektverhältnis (Verhältnis des mittleren Durchmessers zur mittleren Teilchendicke) von 2:1 bis 25000:1, und insbesondere von 3:1 bis 2000:1. Die genannten Maße für die plättchenförmigen Träger gelten prinzipiell auch für die erfindungsgemäß verwendeten beschichteten Effektpigmente, da die zusätzlichen Beschichtungen in der Regel im Bereich von nur wenigen Hundert Nanometern liegen und damit die Dicke oder Länge bzw. Breite (Teilchengröße) der Pigmente nicht wesentlich beeinflussen.

Bevorzugt besteht eine auf dem Träger aufgebrachte Beschichtung aus Metallen, Metalloxiden, Metallmischoxiden, Metallsuboxiden oder Metallfluoriden und insbesondere aus einem farblosen oder farbigen Metalloxid, ausgewählt aus TiO₂, Titansuboxiden, Titanoxinitriden, Fe₂O₃, Fe₃O₄, SnO₂, Sb₂O₃, SiO₂, Al₂O₃, ZrO₂, B₂O₃, Cr₂O₃, ZnO, CuO, NiO oder deren Gemischen.
Beschichtungen aus Metallen sind vorzugsweise aus Aluminium, Titan, Chrom, Nickel, Silber, Zink, Molybdän, Tantal, Wolfram, Palladium, Kupfer, Gold, Platin oder diese enthaltenden Legierungen.
Als Metallfluorid wird bevorzugt MgF₂ eingesetzt.

Besonders bevorzugt sind Effektpigmente, welche einen plättchenförmigen Träger aus Glimmer, Glas, Calcium-Aluminium-Borosilikat, Graphit, SiO₂, Al₂O₃, oder aus Aluminium und mindestens eine Beschichtung aufweisen, welche aus TiO₂, Titansuboxiden, Titanoxinitriden, Fe₂O₃, Fe₃O₄, SnO₂, Sb₂O₃, SiO₂, Al₂O₃, MgF₂, ZrO₂, B₂O₃, Cr₂O₃, ZnO, CuO, NiO oder deren Gemischen ausgewählt ist.

Die Effektpigmente können einen Mehrschichtaufbau aufweisen, bei dem sich auf einem metallischen oder nichtmetallischen Träger mehrere Schichten übereinander befinden, die vorzugsweise aus den vorab genannten Materialien bestehen und verschiedene Brechzahlen in der Art aufweisen, dass sich jeweils mindestens zwei Schichten unterschiedlicher Brechzahl abwechselnd auf dem Träger befinden, wobei sich die Brechzahlen in den einzelnen Schichten um wenigstens 0,1 und bevorzugt um wenigstens 0,3 voneinander unterscheiden. Dabei können die auf dem Träger befindlichen Schichten sowohl farblos als auch farbig, überwiegend transparent, semitransparent oder auch opak sein.

Je nach verwendetem Trägermaterial und Art der aufgebrachten Schichten sind damit auch die erhaltenen Effektpigmente farblos oder weisen eine Körperfarbe auf, bzw. sind überwiegend transparent, semitransparent oder opak. Durch das Mehrschichtsystem auf dem Träger sind sie aber zusätzlich in der Lage, mehr oder weniger intensive und glänzende Interferenzfarben zu erzeugen.

Ebenso können die sogenannten LCPs, die aus vernetzten, orientierten, cholesterischen Flüssigkristallen bestehen, oder aber auch als holographische Pigmente bezeichnete Polymer- oder Metallplättchen als Effektpigmente eingesetzt werden.

Die vorab beschriebenen Effektpigmente können in der erfindungsgemäß eingesetzten Druckfarbe einzeln oder als Gemisch von zwei oder mehreren vorhanden sein. Ebenso können sie im Gemisch mit organischen und/oder anorganischen Farbstoffen oder Farbpigmenten und/oder auch in Gemischen mit unbeschichtetem Glimmer eingesetzt werden. Dabei beträgt der Gewichtsanteil der Effektpigmente in der Druckfarbe im allgemeinen zwischen 1 und 35 Gewichtsprozent und vorzugsweise zwischen 5 und 25 Gewichtsprozent, bezogen auf das Gesamtgewicht der druckfertigen Druckfarbe.

Als Effektpigmente können beispielsweise die im Handel erhältlichen funktionellen Pigmente, Interferenzpigmente oder Perlglanzpigmente, welche unter den Bezeichnungen Iriodin®, Colorstream®, Xirallic®, Miraval®, Ronastar®, Biflair®, Minatec®, Lustrepak®, Colorcrypt®, Colorcode® und Securalic® von der Firma Merck KGaA angeboten werden, Mearlin® der Firma Mearl, Metalleffektpigmente der Firma Eckart sowie optisch variable Effektpigmente wie beispielsweise Variochrom® der Firma BASF, Chromafflair® der Firma Flex Products Inc., Helicone® der Firma Wacker, holographische Pigmente der Firma Spectratec sowie andere kommerziell erhältliche Effektpigmente eingesetzt werden.

Für den Erfolg der vorliegenden Erfindung sind die einzelnen Farbeffekte, die durch die Effektpigmente erzielt werden können, an sich nicht ausschlaggebend. Selbstverständlich werden aber bevorzugt Effektpigmente eingesetzt, mit denen optisch sehr ansprechende Druckergebnisse erzielt werden können, die mit klassischen organischen oder anorganischen Farbstoffen oder Farbpigmenten allein nicht erhalten werden können. So sind gerade im Verpackungsdruck glänzende intensive Interferenzfarben, Metallic-Effekte oder Druckbilder, die beim Abkippen ein Farbspiel und/oder eindrucksvolle Hell/Dunkel-Effekte zeigen (optisch variable Drucke), sehr begehrt. Dabei ist oft der Glitzereffekt der Druckbilder um so größer, je größer die Teilchengröße der Effektpigmente ist. Solche Farb- und Glanzeindrücke lassen sich nur mit plättchenförmigen Effektpigmenten erzielen.

Voraussetzung für ein gutes Druckergebnis ist aber auch, das die Effektpigmente mit der Druckfarbe gleichmäßig aus den Näpfchen ausfließen und sich auf dem Bedruckstoff gut orientieren können, weil nur beim flachen Ausrichten der Pigmentplättchen auf dem Bedruckstoff ein optimales optisches Ergebnis erwartet werden kann.

Die Plättchenform und insbesondere auch die Teilchengröße (Länge bzw. Breite) der Effektpigmente bestimmen dagegen weitestgehend die Anwendbarkeit von Druckfarben, die plättchenförmige Effektpigmente enthalten, im Tiefdruckverfahren.
Es liegt auf der Hand, dass Druckfarben mit einem Gehalt an plättchenförmigen Effektpigmenten, deren Teilchengröße größer ist als der Durchmesser der Näpfchen oder deren Dicke größer ist als die Tiefe der Näpfchen auf der Druckform, mit dieser Druckform nicht verarbeitet werden können. Aber selbst wenn die Größenverhältnisse von Näpfchen und Effektpigment die Aufnahme der plättchenförmigen Effektpigmente in die Näpfchen erlauben, ist ein Verdrucken von effektpigmenthaltigen Druckfarben nicht zwangsläufig störungsfrei möglich. So werden nach außen ragende verkantete Pigmente in der Regel durch den Farbabstreifer (meist eine Rakel) wieder aus den Näpfchen herausgeführt, das Entleerungsverhalten der Druckfarbe ist bedingt durch Pigmentagglomeration im Näpfchen gestört etc.

Je nach bevorzugter Größenfraktion und gewünschten Farbeffekten (letztere hängen, wie vorab bereits erwähnt, auch von den Teilchengrößen der Pigmente ab) werden die Teilchengrößen für das Tiefdruckverfahren oft klassifiziert, beispielsweise in Pigmente mit einer Teilchengröße von 1 bis kleiner 25 *µ*m, Pigmente mit einer Teilchengröße von 1 bis kleiner 60 *µ*m, Pigmente mit einer Teilchengröße von 1 bis kleiner 125 *µ*m, Pigmente mit einer Teilchengröße von 1 bis kleiner 200 *µ*m und Pigmente mit einer Teilchengröße von 10 bis kleiner 500 *µ*m.
Die einzelnen Fraktionen zeigen also ein Gemisch aus Pigmenten verschiedener Teilchengrößen, die eine bestimmte Teilchengröße nicht unter- bzw. überschreiten dürfen.

Überraschenderweise hat sich nun herausgestellt, dass mit Druckformen, welche aus einem flachen oder zylindrischen Körper mit einer metallischen oder keramischen Schicht bestehen, die Vertiefungen in Form von Näpfchen aufweisen, welche per Lasergravur hergestellt sind, wobei die Näpfchen auf der metallischen oder keramischen Schicht der Druckform zumindest teilweise in Gruppen angeordnet sind, Druckfarben, welche mit mindestens einem plättchenförmigen Effektpigment pigmentiert sind, in einem Tiefdruckverfahren besonders gut verdruckt werden können. Bevorzugt ist dabei die Verwendung von Druckformen, bei denen sich die Näpfchen in einer metallischen Schicht befinden.

Die einzelnen Näpfchen weisen dabei einen runden Querschnitt und einen Boden auf, welcher sich in einer bestimmten Tiefe in der metallischen oder keramischen Schicht der Druckform befindet.

Dieser Näpfchenboden kann einerseits flach und im wesentlichen parallel zur Oberfläche der Druckform ausgebildet sein, andererseits kann der Näpfchenboden auch eine Kalottenform aufweisen. Die Bodenform wird über die Leistung und die Form des Laserstrahls bestimmt, mit welchem die Gravur der Näpfchen durchgeführt wird. Wie bereits vorab erwähnt, lässt eine indirekte Lasergravur mit anschließender Ätzung nur weitestgehend kalottenförmige Näpfchenböden zu, während mit der direkten Lasergravur sowohl flache als auch kalottenförmige Näpfchenböden hergestellt werden können.

Auch die Tiefe sowie der Durchmesser der Näpfchen lassen sich mit der eingestellten Laserleistung bestimmen. Die einzelnen Näpfchen auf den Druckformen, die gemäß der vorliegenden Erfindung verwendet werden, weisen Tiefen von 0,1 bis 100 *µ*m, Durchmesser von 1 bis 180 *µ*m, bevorzugt von 20 bis 140 *µ*m, und ein Verhältnis von Tiefe zu Durchmesser von 0,1 bis 2 auf. Letzteres ist besonders bemerkenswert, weil sich Näpfchen, deren Tiefe bis zu dem Doppelten des Näpfchendurchmessers beträgt, mit dem elektromechanischen Gravurverfahren nicht herstellen lassen.

Bei kalottenförmigen Näpfchenböden wird die Tiefe an der Stelle des Bodens bestimmt, die bei Messung im Winkel von 90° am weitesten von der Oberfläche der Druckform entfernt ist.
Es ist besonders hervorhebenswert, dass sich bei über Lasergravur hergestellten Druckformen der Durchmesser und die Tiefe der Näpfchen, bei direkt per Laser gravierten Druckformen zusätzlich auch noch die Form der Näpfchenböden, individuell für jedes einzelne Näpfchen auf der Druckform einstellen lassen.

Erfindungsgemäß sind die Näpfchen auf der metallischen oder keramischen Schicht der Druckform zumindest teilweise in Gruppenform angeordnet.

Dabei besteht eine Gruppe aus mindestens zwei Näpfchen. Sie kann jedoch auch aus drei, vier, fünf, sechs, sieben, acht, neun Näpfchen bestehen, welche dicht nebeneinander angeordnet sind. Dabei sind die Näpfchen vorzugsweise so angeordnet, das sie die Form eines Vielecks ergeben, welches der Anzahl der Näpfchen oder der Anzahl der Näpfchen minus eins entspricht. Erfindungsgemäß handelt es sich um Gruppen, welche bis zu neun Näpfchen enthalten. Insbesondere bevorzugt sind die Näpfchen in einer hexagonalen Form angeordnet, welche aus sechs oder sieben Näpfchen besteht und bei sieben Näpfchen die Form einer Rosette ausbilden können.

In einer ersten Ausführungsform sind diese Näpfchen dicht nebeneinander angeordnet, ohne dass sich die Außenränder der Näpfchen gegenseitig berühren. Dabei ist eine Gruppenbildung optisch klar dadurch erkennbar, dass der Abstand der Näpfchen in der Gruppe zueinander geringer ist als der Abstand jedes der Näpfchen der Gruppe zu einem benachbarten Näpfchen außerhalb der Gruppe.

In einer zweiten Ausführungsform sind die Näpfchen der Gruppe so angeordnet, dass sich die Außenränder von jeweils mindestens zwei Näpfchen der Gruppe an mindestens einem Punkt berühren, während sich die Außenränder von keinem der Näpfchen der Gruppe mit einem benachbarten Näpfchen außerhalb der Gruppe berühren.

In einer dritten, besonders bevorzugten, Ausführungsform sind die Näpfchen der Gruppe so angeordnet, dass sie sich teilweise überschneiden. Auch in dieser Ausführungsform berührt keines der Näpfchen der Gruppe mit seinem Außenrand ein benachbartes Näpfchen außerhalb der Gruppe. Dabei kann, wie in den anderen Ausführungsformen auch, die Tiefe der einzelnen Näpfchen unterschiedlich sein. Insbesondere kann bei einer hexagonal angeordneten Gruppe, welche aus sieben Näpfchen besteht, das zentrale Näpfchen eine größere Tiefe als die anderen Näpfchen der Gruppe aufweisen.

Selbstverständlich können sich die in Gruppen angeordneten Näpfchen in horizontaler oder vertikaler Richtung auf der Druckform in regelmäßigen oder unregelmäßigen Abständen auch mit einzelnen lasergravierten Näpfchen der oben dargestellten Art abwechseln, das heißt die Druckform kann Näpfchen aufweisen, welche in Gruppen angeordnet sind, und Näpfchen, welche nicht in Gruppen angeordnet sind.

Aus den Variationsmöglichkeiten für den Durchmesser, die Tiefe und die Näpfchenbodenform ergibt sich auch, dass die Druckform Näpfchen aufweist, welche eine gleiche und/oder eine verschiedene Bodenform, einen gleichen und/oder verschiedenen Durchmesser und eine gleiche und/oder verschiedene Tiefe besitzen.

Diese Auswahl wird der Drucker gemäß dem gewünschten Druckbild treffen.

Es hat sich als besonders vorteilhaft herausgestellt, wenn unabhängig von der Teilchengröße der Effektpigmente und dem Durchmesser, der Tiefe und der Bodenform der Näpfchen ein großer Teil, und bevorzugt alle der Näpfchen auf der Druckform in Form von Gruppen vorliegen, und insbesondere in Form hexagonaler Gruppen mit sechs oder sieben Näpfchen.

Damit lassen sich sowohl im Flächendruck als auch im Detaildruck deutliche Qualitätssteigerungen in Form von Vollfarbaufträgen mit hoher Farbsättigung, guten Halbtonwerten und sauberen und feinen Linienstrukturen bei Details erhalten.
Dies gilt gleichermaßen für Bedruckstoffe mit geringer und hoher Saugfähigkeit, beispielsweise für Folien ebenso wie für Tissue-Material. Die plättchenförmigen Effektpigmente in den Druckfarben richten sich auf dem Bedruckstoff gut aus und können ihre optischen Eigenschaften wie Metall-, Glanz- oder spezielle Farbeffekte voll zur Geltung bringen. Auch feine Linien werden ohne die früher im Tiefdruckverfahren üblichen Sägezahneffekte glatt und durchgehend pigmentiert ausgebildet.

Es ist nicht genau erklärbar, auf welchem Mechanismus dieser Effekt beruht. Es lässt sich aber feststellen, dass das Fließverhalten der plättchenförmige Effektpigmente enthaltenden Druckfarben insgesamt verbessert wird, wenn ein hoher Anteil an gruppierten Näpfchen, vorzugsweise 100 Prozent der Näpfchen, auf der Druckwalze vorliegt.

Es wurde außerdem gefunden, dass mit wachsender Teilchengröße (Länge bzw. Breite) der Effektpigmente für ein besonders gutes Druckergebnis ein insgesamt größeres Näpfchenvolumen erforderlich ist. Dies trifft sowohl für jedes einzelne Näpfchen als auch für die Gruppe zu.

Dieses vergrößerte Näpfchenvolumen kann durch verschiedene Maßnahmen erhalten werden, beispielsweise durch Änderung der Näpfchenbodenform von kalottenförmig auf flach bei gleichbleibender Näpfchentiefe, durch Vergrößerung des Durchmessers der Näpfchen, durch Vergrößerung der Tiefe der Näpfchen oder durch Ineinandergreifen der Näpfchen der Gruppe durch teilweise Überschneidung.

Selbstverständlich können diese Maßnahmen einzeln oder in verschiedenen Variationen gemeinsam ergriffen werden.

Als besonders vorteilhaft hat sich dabei herausgestellt, wenn alle Näpfchen innerhalb einer Gruppe jeweils einen flachen Näpfchenboden und denselben Durchmesser aufweisen und alle Näpfchengruppen, die sich auf der Druckform befinden, sich lediglich in der Tiefe der Näpfchen unterscheiden. Die Tiefe der Näpfchengruppe wird dabei gleichgesetzt mit der Tiefe des tiefsten Näpfchens der Gruppe.

Die Näpfchengruppen können dabei in jeder der drei vorab beschriebenen Ausführungsformen vorliegen, d.h. sich gegenseitig nicht berühren, an mindestens einem Punkt berühren oder sich gegenseitig überschneiden. Diese drei Ausführungsformen können jeweils allein oder in Kombination aus zweien oder dreien miteinander vorliegen. Am vorteilhaftesten ist die Ausführungsform, bei der sich die Näpfchen in der Gruppe teilweise überschneiden und insbesondere die Ausführungsform, bei der sieben Näpfchen sich teilweise überschneiden und in einer rosettenartigen Form vorliegen. In dieser Anordnung weist jedes der Näpfchen einen im wesentlichen flachen Näpfchenboden auf, die Bodenform der gesamten Gruppe kann aber, bedingt durch das teilweise Überlappen der einzelnen Näpfchen, eine von der idealen flachen Form abweichende Bodenform aufweisen.

Bei einer derartigen Näpfchenanordnung auf der Druckform findet eine Steuerung der zu übertragenden Druckfarbenmenge innerhalb einer festgelegten Rasterweite vorzugsweise über die Tiefe der Näpfchen statt, nicht jedoch über deren Durchmesser oder die Näpfchenbodenform.

Die Näpfchentiefe jedes einzelnen Näpfchens und jeder Näpfchengruppe kann dabei je nach zu übertragender Druckfarbenmenge in sehr kleinen Schritten variiert werden. So sind Näpfchentiefen von 1 µm einstellbar, die je nach Bedarf bis 100 *µ*m variabel eingestellt werden können, vorzugsweise jedoch in Schritten von etwa 2, etwa 5 oder etwa 10 *µ*m variiert werden.

So lässt sich beispielsweise feststellen, dass Effektpigmente mit einer Teilchengröße von bis kleiner als 25 *µ*m bei gruppenförmig angeordneten Näpfchen mit kalottenförmigen Näpfchenböden, deren Durchmesser und Tiefe sich jeweils gleichlaufend vergrößern oder verringern (das heißt, dass bei steigendem Durchmesser sich auch die Tiefe erhöht), gut verdruckt werden können.
Wird für diese Effektpigmente jedoch eine Druckform eingesetzt, auf der Näpfchengruppen vorliegen, die alle einen flachen Näpfchenboden sowie den gleichen Näpfchendurchmesser aufweisen und sich nur in der Näpfchentiefe unterscheiden, kommen insbesondere Halbtonwerte und feine Drucklinien besser zur Geltung. Wenn sich bei der letztgenannten Variante die Näpfchen noch teilweise überschneiden, kann der Druckerfolg nochmals verbessert werden.

Für mittlere Teilchengrößen bis zu kleiner als 60 µm können ebenfalls beide oben beschriebenen Näpfchengruppenarten angewendet werden. Bevorzugt sind auch hier die Näpfchengruppen zu empfehlen, die einen flachen Näpfchenboden und den gleichen Näpfchendurchmesser aufweisen und bei denen sich die Näpfchentiefe mit steigender Menge an zu übertragender Druckfarbe vergrößert. Auch hier werden noch bessere Druckergebnisse erhalten, wenn sich bei der letztgenannten Variante die Näpfchen teilweise überschneiden.

Druckfarben, die gröbere Effektpigmente mit Teilchengrößen von 1 bis kleiner als 125 *µ*m und von 1 bis kleiner 200 *µ*m enthalten, sind dagegen mit Näpfchengruppen, die kalottenförmige Näpfchenböden und sich gleichlaufend vergrößernde oder verringernde Durchmesser und Tiefen aufweisen, nicht mehr mit befriedigendem Ergebnis verdruckbar. Für diese Teilchengrößen stellen die Näpfchengruppen, die einen flachen Näpfchenboden und den gleichen Näpfchendurchmesser bei sich gegenseitig überschneidenden Näpfchen aufweisen und bei denen sich die Näpfchentiefe mit steigender Menge an zu übertragender Druckfarbe vergrößert, die beste Ausführungsform dar.

Für sehr grobe Effektpigmente, die in elektromechanisch gravierten Druckformen nicht eingesetzt werden können, mit einer Teilchengröße von 125 bis 200 *µ*m und insbesondere von 125 bis kleiner 500 *µ*m, welche beispielsweise in die Größenfraktion von 10 bis kleiner als 500 *µ*m eingeordnet werden, sind dagegen Näpfchengruppen mit flachen Näpfchenböden und mit besonders großer Tiefe empfehlenswert, und insbesondere die hexagonalen Gruppen aus sieben Näpfchen, die sich teilweise überlappen und so ineinander übergehen. Selbstverständlich sind diese Näpfchenanordnungen auch für kleinere Teilchengrößen von Effektpigmenten einsetzbar. Letztere zeigen jedoch zumindest bei glatten Bedruckstoffen bei den oben angegebenen Näpfchenanordnungen ein besseres Entleerungsverhalten.

Dabei versteht es sich von selbst, dass zumindest beim Einsatz von Näpfchengruppen, bei denen die Näpfchen separat voneinander angeordnet sind, die Teilchengröße der Effektpigmente nur höchstens so groß sein darf, dass sie in jedem Falle kleiner ist als der Durchmesser der einzelnen Näpfchen. Wenn dagegen eine hexagonale Form der Gruppe vorliegt, bei der sechs oder sieben Näpfchen einander zumindest teilweise überlappen, können auch Druckfarben eingesetzt werden, bei denen die Teilchengrößen der Effektpigmente gleich oder größer sind als die Durchmesser der einzelnen Näpfchen.

Die Näpfchen sind auf der Druckform in den üblichen im Tiefdruckverfahren verwendeten Rastergrößen aufgebracht. Rastergrößen von 10 bis 400 Linien/cm, insbesondere von 30 bis 100 Linien/cm, sind einsetzbar.

Gegenstand der vorliegenden Erfindung ist auch ein Tiefdruckverfahren, bei welchem die Vertiefungen einer Druckform, welche aus einem flachen oder zylindrischen Körper mit einer metallischen oder keramischen Schicht besteht, die Vertiefungen in Form von Näpfchen aufweist, welche per Lasergravur hergestellt sind, mit einer Wasser und/oder ein organisches Lösemittel oder organisches Lösemittelgemisch enthaltenden Druckfarbe in einer Menge von mindestens 35 Gew.-%, bezogen auf das Gesamtgewicht der Druckfarbe befüllt und anschließend die überschüssige Farbe von der Oberfläche der Druckform entfernt wird, wonach die sich in den Näpfchen verbleibende Druckfarbe durch mechanisches Anpressen der Druckform an einen Druckstoff auf diesen übertragen und anschließend getrocknet und/oder ausgehärtet wird, wobei die Druckfarbe mindestens ein plättchenförmiges Effektpigment enthält und die Näpfchen auf der metallischen oder keramischen Schicht mindestens teilweise in Gruppen angeordnet sind, wobei die Gruppen aus mindestens zwei und bis zu neun Näpfchen bestehen.

Die Druckfarbe enthält dabei die vorab bereits beschriebenen Inhaltsstoffe.

Die Effektpigmente sind so gewählt, dass sie eine Dicke im Bereich von 0,01 bis 5 µm, eine Länge bzw. Breite im Bereich von 1 bis 500 µm sowie Aspektverhältnisse von 2:1 bis 25000:1 aufweisen.

Die Viskosität der Druckfarbe wird so eingestellt, dass unter den gewünschten Druckbedingungen wie Drucktemperatur und Druckgeschwindigkeit und unter Berücksichtigung der verschiedenen Bedruckstoffe optimale Bedingungen für das Befüllen und Auslaufen der Näpfchen sowie für den nachfolgenden Trocknungsprozess (Verdampfen des Lösemittels) herrschen. Diese Einstellung erfolgt mit dem Fachwissen des Druckers.

Die einzelnen Verfahrensschritte eines Tiefdruckverfahrens sind an sich bekannt. Die Vertiefungen einer Druckform, d.h. einer Druckplatte oder eines Druckzylinders, werden zunächst mit der flüssigen Druckfarbe gefüllt. Dies geschieht bei Druckzylindern in der Regel durch das Eintauchen in eine Druckwanne, welche mit der Druckfarbe gefüllt ist. Anschließend wird die überschüssige Farbe von der Oberfläche der Druckform, die aus den erhabenen, nicht druckenden Flächenteilen der Druckform besteht, mittels einer geeigneten Vorrichtung, bei der es sich in der Regel um eine Rakel handelt, abgestreift. Die Druckfarbe befindet sich nunmehr nur noch in den Vertiefungen (Näpfchen) der Druckform und wird auf einen Bedruckstoff übertragen, indem dieser durch Druckausübung an die Druckform gepresst wird.
Der Bedruckstoff nimmt die flüssige Druckfarbe auf, deren leichtflüchtige Bestandteile anschließend verdampfen (bei Normaltemperatur bzw. in der Regel durch Zuführung von Luft und/oder Wärme bei erhöhter Temperatur ). Nachfolgend härtet das Bindemittel mit den anderen festen Bestandteilen der Druckfarbe durch vollständige Trocknung und/oder Vernetzung aus, wobei letztere durch verschiedene Maßnahmen, z.B. durch UV-Bestrahlung, beschleunigt werden kann.

Die erfindungsgemäße Verwendung von Druckformen, deren Näpfchen durch Lasergravur hergestellt werden und in Gruppen angeordnet sind, zum Verdrucken einer Druckfarbe, die plättchenförmige Effektpigmente enthält, in einem Tiefdruckverfahren, geschieht ebenfalls nach den oben beschriebenen Verfahrensschritten.

Bedingt durch die gruppenförmige Anordnung der Näpfchen und die individuelle Einstellbarkeit von Durchmesser, Tiefe und Näpfchenbodenform jedes einzelnen Näpfchens ist das Entleerungsverhalten der pigmentierten Druckfarbe aus den Näpfchen jedoch so gut einstellbar, dass weniger Lösemittel und insgesamt gegebenenfalls auch weniger Druckfarbe gebraucht werden, um qualitativ hervorragende Druckbilder zu erzielen.
Insbesondere werden auch die plättchenförmigen Pigmente beim Entleeren der Druckfarbe aus dem Näpfchen nicht mehr von den anderen Bestandteilen der Druckfarbe separiert und es kommt weder zu Pigmentagglomerationen in den Näpfchen noch auf dem Bedruckstoff. Daher sind auch sehr feine Linien bis zu einer Stärke von 0,04 mm ohne Pigmentierungsstörungen erhältlich.

Solche feinen Linienstrukturen sind für verschiedene Anwendungsgebiete von großem Interesse, beispielsweise für Spezialverpackungen oder für Anwendungen im Sicherheitsdruck. Gerade im Sicherheitsdruck gehören feine Linien, z.B. für Barcodes, Guillochen oder Mikrotexte inzwischen zum Standard. Mit Hilfe der vorliegenden Erfindung wird es nun möglich, diese Linienstrukturen auch mit Effektpigment-haltigen Druckfarben erhalten zu können.

Einschränkungen hinsichtlich der verwendbaren Bedruckstoffe müssen ebenfalls nicht hingenommen werden. Das erfindungsgemäße Tiefdruckverfahren eignet sich gleichermaßen gut zum Bedrucken von Bedruckstoffen wie Papieren, Kartonagen, Tapeten, Laminaten, Tissue-Materialien, Holz, Metallen, polymeren Folien, Metallfolien, oder zum Bedrucken von Materialien, welche Bestandteile aus mehreren dieser Stoffe enthalten, beispielsweise folienkaschierten Papieren. Auch Spezialpapiere, wie beispielsweise Banknotenpapiere oder Papiere, die sichtbare oder unsichtbare Sicherheitsmerkmale enthalten, können mit dem erfindungsgemäßen Tiefdruckverfahren bedruckt werden.

Wie allgemein üblich, können die Bedruckstoffe einer elektrostatischen Vorbehandlung unterzogen werden und/oder mit Primärschichten versehen werden. Diese bestehen beispielsweise aus Farb- oder den so genannten Primerschichten. Deshalb kann es sich bei den eingesetzten Papieren beispielsweise um ungestrichene, gestrichene oder auch satinierte Papiere handeln. Dies gilt ebenso für die anderen Arten von Bedruckstoffen.

Selbstverständlich erfordert aber auch die verschiedene Saugfähigkeit des Bedruckstoffes eine Anpassung der gewählten Näpfchengeometrie.
Als allgemeine Regel wurde hier gefunden, dass unabhängig von der Teilchengröße der plättchenförmigen Effektpigmente mit steigender Saugfähigkeit des Bedruckstoffes ein größeres Näpfchenvolumen vorteilhaft ist. Das Näpfchenvolumen kann, wie bereits vorab beschrieben, durch Variation von Näpfchendurchmesser, Tiefe und Bodenform, einzeln oder in Kombination miteinander, eingestellt werden.
Dies gilt sowohl für einzelne Näpfchen als auch für einzelne oder alle Näpfchengruppen auf der Druckform.

So sind beispielsweise auf den sehr saugfähigen Tissue-Materialien (Servietten, Hygienepapiere etc.) bei Verwendung von hexagonalen Näpfchengruppen aus sechs oder sieben Näpfchen, welche sich teilweise überschneiden, einen flachen Näpfchenboden und außerdem auch eine erhöhte Tiefe bis zu 100 *µ*m aufweisen, noch gute Glanz- und Farbeffekte erkennbar, wenn eine Druckfarbe verdruckt wird, die plättchenförmige Interferenzpigmente enthält. Dasselbe trifft auch auf die in der Regel sehr saugfähigen Banknotenpapiere zu.

Die vorliegende Erfindung läßt sich mit gutem Erfolg beim Drucken von qualitativ hochwertigen Tiefdrucksachen in hoher Quantität einsetzen. Dabei handelt es sich sowohl um die klassischen Drucksachen wie Zeitschriften und Kataloge, um Etiketten, Dekorfolien, Tapeten und Werbematerialien, als auch um Verpackungen beispielsweise für Lebensmittel, Kosmetik- und Tabakprodukte, pharmazeutische und Tierfutterprodukte oder Kunststoffprodukte wie Tubenlaminate und dergleichen.

Die vorliegende Erfindung lässt sich ebenso zur Erzeugung von Sicherheitsdruckerzeugnissen aller Art verwenden, beispielsweise zum Bedrucken der bereits erwähnten Etiketten und Verpackungsmaterialien mit Sicherheitsmerkmalen, aber ebenso zur Herstellung verschiedener Sicherheitsprodukte wie Banknoten, Schecks, Kreditkarten, Aktien, Pässe, Ausweisdokumente, Chipkarten, Führerscheine, Eintrittskarten, Wertmarken, Siegel, etc.

Die so hergestellten Druckerzeugnisse können nachträglich den üblichen Veredelungstechniken unterzogen werden, die beispielsweise eine Überlackierung zu Schutz- oder ästhetischen Zwecken, aber auch mechanische Nachbehandlungen wie z. B. Kalandrieren, Prägen oder Kaschieren umfassen können.

Bedingt durch die hochvariablen Näpfchengeometrien lassen sich verschiedene Arten und Teilchengrößen von plättchenförmigen Effektpigmenten auf Bedruckstoffe der verschiedensten Art drucken, ohne dass die speziellen optischen Vorteile der Effektpigmente verloren gehen. Insbesondere lassen sich mit der vorliegenden Erfindung auch plättchenförmige Effektpigmente in Tiefdruckverfahren einsetzen, die bisher auf Grund ihrer großen Teilchengrößen nicht für Tiefdruckverfahren einsetzbar waren. Mit solchen groben Effektpigmenten lassen sind aber besonders gute Glanz- und Glitzereffekte erzielen.

Bei Verwendung von Druckzylindern gemäß der vorliegenden Erfindung ist es von besonderem Vorteil, dass sowohl über den Umfang als auch über die Breite des Druckzylinders beliebige Variationen von Rasterweiten und Näpfchengeometrien eingesetzt werden können.

Die Anwendung der vorliegenden Erfindung erlaubt sowohl die Herstellung von Flächendrucken mit hoher Farbsättigung bei hoher optischer Attraktivität, als auch eine besonders feine Ausprägung von störungsfreien, sehr dünnen Drucklinien sowie guten Halbtonwerten und dadurch variable Farbschattierungen.

Damit ist die vorliegende Erfindung hervorragend geeignet, hochqualitative und optisch hoch ansprechende Druckergebnisse im Tiefdruckverfahren zu erzeugen, die mit den bisher üblichen Druckformen im Tiefdruckverfahren nicht zu erhalten waren.

Die Erfindung soll nachfolgend anhand von Beispielen erläutert werden.

### Beispiel 1:

Eine Druckfarbe, welche aus 75 Gewichtsteilen eines Bindemittel, Additive und Lösemittel enthaltenden Druckfarbenverschnittes (Masterblend 50, 50.36 Rotation Verschnittlack der Fa. Sicpa Aarberg (CH)), 25 Gewichtsteilen eines plättchenförmigen Effektpigments, welches auf einem SiO₂₋Plättchen eine Beschichtung aus TiO₂ (Rutil) aufweist (Colorstream® Viola Fantasy der Fa. Merck KGaA Darmstadt (DE), Teilchengrösse 5-50 *µ*m) sowie 30 Gewichtsteilen eines Lösemittelgemisches (2:1) aus Ethoxypropanol und Ethanol besteht, wird mit einer Tiefdruckmaschine vom Typ Moser Rototest (Einfarbendruckmaschine) mit einer Geschwindigkeit von 100 m/min bei einer Trocknungstemperatur von 80°C auf ein Papier (Algrofiness, 80 g/m², hf, weiß, einseitig gestrichen) gedruckt. Die Druckfarbe hat eine durch die Auslaufzeit charakterisierte Viskosität von 20 s bei 20°C, 60% relativer Luftfeuchte, gemessen im 4 mm/DIN Cup. Als Druckmotiv werden Vollflächen sowie Halbtonwerte mit einer 10-prozentigen Abstufung des Farbauftrages von 10 bis 100 Prozent sowie Linienstrukturen mit Linienstärken zwischen 0,3 und 0,08 mm verwendet. Es wurde ein direkt lasergravierter metallischer Druckzylinder verwendet. Bei einer Rasterweite von 50 Linien/cm wurde dieser für die Bereiche, die auf dem Papier einen Vollfarbdruck und Linienmotive erzeugen sollen, mit Näpfchengruppen versehen, die aus je sieben Näpfchen mit einem Durchmesser von je 95 µm und einer Tiefe von 45 µm bei kalottenförmigem Näpfchenboden bestehen, wobei sich die Näpfchen teilweise überschneiden.

Für die Bereiche, mit denen Halbtonwerte erzielt werden sollen, werden Näpfchengruppen aus je sieben Näpfchen eingesetzt, die bei 100 Prozent Farbübertragung sich teilweise überschneiden und einen Durchmesser von je 95 µm und eine Tiefe von 45 µm aufweisen. Für den gewünschten verringerten Farbtonauftrag auf bis zu 10 Prozent Farbübertragung wird die Näpfchentiefe auf bis zu 3 µm und der Näpfchendurchmesser auf bis zu 55 µm stufenweise in 10 Stufen abgesenkt. Bei der letztgenannten Näpfchengeometrie überschneiden sich die einzelnen Näpfchen nicht mehr.

Es wird ein Druckbild erhalten, bei dem die Vollfläche einen gleichmäßigen Farbauftrag mit hoher Sättigung aufweist, die Halbtonwerte in jeder der 10 Abstufungen gut erkennbar und deutlich voneinander unterscheidbar sind und die Linienstrukturen zwischen 0,30 und 0,08 mm Linienstärke gut ausgeprägt und sichtbar sind.

### Beispiel 2:

Eine Druckfarbe, welche 75 Gewichtsteile eines Bindemittel, Additive und Lösemittel enthaltenden Druckfarbenverschnittes (Masterblend 50, 50.36 Rotation Verschnittlack der Fa. Sicpa Aarberg (CH)) und 25 Gewichtsteile eines plättchenförmigen Effektpigments, welches auf einem SiO₂-Plättchen eine Beschichtung aus TiO₂ (Rutil) aufweist (Colorstream® Arctic Fire der Fa. Merck KGaA Darmstadt (DE), Teilchengrösse 5-50 µm) enthält, wird mit einem Lösemittelgemisch (1:1) aus Ethoxypropanol und Ethanol so eingestellt, dass eine durch die Auslaufzeit charakterisierte Viskosität von 18 s bei 20°C, 60% relativer Luftfeuchte, gemessen im 4 mm/DIN Cup erhalten wird.
Die Druckfarbe wird mit einer GMS-Einfarbentiefdruckmaschine mit einer Geschwindigkeit von 60m/min auf ein Papier (LWC, 60g/m², weiß, einseitig gestrichen) gedruckt.

Als Druckmotiv werden Vollflächen sowie Halbtonwerte mit einer 10-prozentigen Abstufung des Farbauftrages von 10 bis 100 Prozent sowie Linienstrukturen mit Linienstärken zwischen 0,3 und 0,08 mm verwendet.

Es wurde ein direkt lasergravierter metallischer Druckzylinder verwendet. Bei einer Rasterweite von 80 Linien/cm wurde dieser für die Bereiche, die auf dem Papier einen Vollfarbdruck und Linienmotive erzeugen sollen, mit Näpfchengruppen versehen, die aus je sieben Näpfchen mit einem Durchmesser von je 50 µm und einer Tiefe von 30 µm bei flachem Näpfchenboden bestehen, wobei sich die Näpfchen teilweise überschneiden.

Für die Bereiche, mit denen Halbtonwerte erzielt werden sollen, werden Näpfchengruppen aus je sieben Näpfchen eingesetzt, die bei 100 Prozent Farbübertragung sich teilweise überschneiden und einen Durchmesser von je 50 µm und eine Tiefe von 30 µm aufweisen. Für den gewünschten verringerten Farbtonauftrag auf bis zu 10 Prozent Farbübertragung wird die Näpfchentiefe auf bis zu 4 *µ*m stufenweise in 10 Stufen abgesenkt.

Es wird ein Druckbild erhalten, bei dem die Vollfläche einen gleichmäßigen Farbauftrag mit hoher Sättigung aufweist, die Halbtonwerte ab etwa 40 Prozent Farbauftrag gut erkennbar und deutlich voneinander unterscheidbar sind und die Linienstrukturen zwischen 0,30 und 0,10 mm Linienstärke gut ausgeprägt und sichtbar sind.

### Beispiel 3:

Eine Druckfarbe, welche 70 Gewichtsteile eines Bindemittel, Additive und Lösemittel enthaltenden Druckfarbenverschnittes (Masterblend 50, 50.36 Rotation Verschnittlack der Fa. Sicpa Aarberg (CH)) und 30 Gewichtsteile eines plättchenförmigen Effektpigments, welches auf einem Glimmer-Träger eine Beschichtung aus TiO₂ (Rutil) aufweist (Iriodin® 123 (rutil) Bright Lustre Satin der Fa. Merck KGaA Darmstadt (DE), Teilchengrösse 5-25 µm) enthält, wird mit einem Lösemittelgemisch (1:1) aus Ethoxypropanol und Ethanol so eingestellt, dass eine durch die Auslaufzeit charakterisierte Viskosität von 18 s bei 20°C, 60% relativer Luftfeuchte, gemessen im 4 mm/DIN Cup erhalten wird.
Die Druckfarbe wird mit einer GMS-Einfarbentiefdruckmaschine mit einer Geschwindigkeit von 60m/min auf ein Papier (LWC, 60g/m², weiß, einseitig gestrichen) gedruckt.

Als Druckmotiv werden Vollflächen sowie Halbtonwerte mit einer 10-prozentigen Abstufung des Farbauftrages von 10 bis 100 Prozent sowie Linienstrukturen mit Linienstärken zwischen 0,3 und 0,08 mm verwendet.

Es wurde ein direkt lasergravierter metallischer Druckzylinder verwendet. Bei einer Rasterweite von 80 Linien/cm wurde dieser für die Bereiche, die auf dem Papier einen Vollfarbdruck und Linienmotive erzeugen sollen, mit Näpfchengruppen versehen, die aus je sieben Näpfchen mit einem Durchmesser von je 50 µm und einer Tiefe von 30 µm bei flachem Näpfchenboden bestehen, wobei sich die Näpfchen teilweise überschneiden.

Für die Bereiche, mit denen Halbtonwerte erzielt werden sollen, werden Näpfchengruppen aus je sieben Näpfchen eingesetzt, die bei 100 Prozent Farbübertragung sich teilweise überschneiden und einen Durchmesser von je 50 µm und eine Tiefe von 30 µm aufweisen. Für den gewünschten verringerten Farbtonauftrag auf bis zu 10 Prozent Farbübertragung wird die Näpfchentiefe auf bis zu 4 µm stufenweise in 10 Stufen abgesenkt.

Es wird ein Druckbild erhalten, bei dem die Vollfläche einen gleichmäßigen Farbauftrag mit hoher Sättigung aufweist, die Halbtonwerte ab etwa 35 Prozent Farbauftrag gut erkennbar und deutlich voneinander unterscheidbar sind, positive Linienstrukturen zwischen 0,30 und 0,10 mm und Negativlinien sogar bis 0,04 mm Linienstärke gut ausgeprägt und sichtbar sind.

### Beispiel 4:

Eine Druckfarbe, welche aus 85 Gewichtsteilen eines Bindemittel, Additive und Wasser enthaltenden Druckfarbenverschnittes (Folco-Aqua-Flex FT 9002 B der Fa. Follmann & Co., Minden (DE)), 15 Gewichtsteilen eines plättchenförmigen Effektpigments, welches auf einem Calcium-Aluminium-Borosilikat-Plättchen eine Beschichtung aus TiO₂ (Rutil) aufweist (Miraval® 5411 Magic White der Fa. Merck KGaA Darmstadt (DE), Teilchengrösse 20-200 µm) sowie 7 Gewichtsteilen Wasser besteht, wird mit einer Tiefdruckmaschine vom Typ Moser Rototest (Einfarbendruckmaschine) mit einer Geschwindigkeit von 100 m/min bei einer Trocknungstemperatur von 80°C auf ein unbehandeltes Tapetenpapier gedruckt. Die Druckfarbe hat eine durch die Auslaufzeit charakterisierte Viskosität von 20 s bei 20°C, 60% relativer Luftfeuchte, gemessen im 4 mm/DIN Cup.

Als Druckmotiv werden nur Vollflächen eingesetzt.

Es wurde ein direkt lasergravierter metallischer Druckzylinder verwendet. Bei einer Rasterweite von 50 Linien/cm wurde dieser auf einem Teilbereich mit Näpfchengruppen versehen, die aus je sieben Näpfchen mit einem Durchmesser von je 95 µm und einer Tiefe von 45 µm bei flachem Näpfchenboden bestehen, wobei sich die Näpfchen teilweise überschneiden.

Ein weiterer Teilbereich des Druckzylinders wurde bei einer Rasterweite von 50 Linien/cm mit Näpfchengruppen versehen, die aus je sieben Näpfchen mit einem Durchmesser von je 95 *µ*m und einer Tiefe von 90 *µ*m bei flachem Näpfchenboden bestehen, wobei sich die Näpfchen teilweise überschneiden.

Die Bereiche des Druckzylinders, welche Näpfchentiefen von 45 µm aufweisen, führen zu einem schwachen, aber vollflächigen Farbauftrag auf dem Tapetenpapier.
Bei den Bereichen, die mit Näpfchen mit einer Tiefe von 90 *µ*m versehen sind, wird ein Vollfarbauftrag erhalten, welcher gut sichtbar ist und einen ausgeprägten Glitzereffekt aufweist.

## Patentansprüche

1. Verwendung von Druckformen, welche aus einem flachen oder zylindrischen Körper mit einer metallischen oder keramischen Schicht bestehen, die Vertiefungen in Form von Näpfchen aufweist, welche per Lasergravur hergestellt sind, zum Verdrucken von Druckfarben, welche mit mindestens einem plättchenförmigen Effektpigment pigmentiert sind, und wobei die Druckfarbe ein Lösemittel, welches aus Wasser und/oder organischen Lösemitteln oder organischen Lösemittelgemischen besteht, in einer Menge von mindestens 35 Gewichtsprozent, bezogen auf das Gesamtgewicht der Druckfarbe, enthält, in einem Tiefdruckverfahren, wobei die Näpfchen auf der metallischen oder keramischen Schicht der Druckform zumindest teilweise in Gruppen angeordnet sind, welche aus mindestens zwei und bis zu neun Näpfchen bestehen.

2. Verwendung gemäß Anspruch 1, wobei es sich bei den Druckformen um Druckplatten oder Druckzylinder handelt.

3. Verwendung gemäß den Ansprüchen 1 und 2, wobei die Druckfarbe bei Normaltemperatur oder bei erhöhter Temperatur und/oder durch Bestrahlung mit UV-Licht trocknet und/oder aushärtet.

4. Verwendung gemäß den Ansprüchen 1 bis 3, wobei das plättchenförmige Effektpigment ein Perlglanzpigment, ein Interferenzpigment, ein Metalleffektpigment, ein Flüssigkristallpigment (Liquid Crystal Pigment), ein strukturiertes Pigment oder ein Gemisch aus diesen ist.

5. Verwendung gemäß Anspruch 4, wobei das Effektpigment einen plättchenförmigen Träger mit optional mindestens einer Beschichtung aus einem Metall, Metalloxid, Metalloxidhydrat oder deren Gemischen, einem Metallmischoxid, -suboxid, -oxinitrid, Metallfluorid oder einem Polymer umfasst.

6. Verwendung gemäß den Ansprüchen 4 oder 5, wobei das Effektpigment einen plättchenförmigen Träger aus natürlichem oder synthetischem Glimmer, Kaolin oder einem anderen Schichtsilikat, aus Glas, Calcium-Aluminium-Borosilikat, SiO₂, TiO₂, Al₂O₃, Fe₂O₃, Polymerplättchen, Graphitplättchen oder aus Metallplättchen aufweist.

7. Verwendung gemäß den Ansprüchen 4 bis 6, wobei das Effektpigment einen plättchenförmigen Träger aus Glimmer, Glas, Calcium-Aluminium-Borosilikat, Graphit, SiO₂, Al₂O₃ oder aus Aluminium und mindestens eine Beschichtung aufweist, welche aus TiO₂, Titansuboxiden, Titanoxinitriden, Fe₂O₃, Fe₃O₄, SnO₂, Sb₂O₃, SiO₂, Al₂O₃, MgF₂, ZrO₂, B₂O₃, Cr₂O₃, ZnO, CuO, NiO oder deren Gemischen ausgewählt ist.

8. Verwendung gemäß den Ansprüchen 4 bis 7, wobei das Effektpigment eine Dicke zwischen 0,01 und 5 µm, eine Länge bzw. Breite von 1 bis 500 µm und ein Aspektverhältnis von 2:1 bis 25000:1 aufweist.

9. Verwendung gemäß einem oder mehreren der Ansprüche 1 bis 8, wobei die einzelnen Näpfchen einen runden Querschnitt und einen Boden aufweisen, welcher sich in einer bestimmten Tiefe in der metallischen Beschichtung der Druckform befindet.

10. Verwendung gemäß Anspruch 9, wobei die Näpfchen einen flachen Boden aufweisen, welcher im wesentlichen parallel zur Oberfläche der Druckform ausgebildet ist.

11. Verwendung gemäß Anspruch 9, wobei die Näpfchen einen kalottenförmigen Boden aufweisen.

12. Verwendung gemäß einem oder mehreren der Ansprüche 9 bis 11, wobei die Näpfchen einen Durchmesser von 1 bis 180 µm, eine Tiefe von 0,1 bis 100 µm und ein Verhältnis von Tiefe zu Durchmesser von 0,1 bis 2 aufweisen.

13. Verwendung gemäß einem oder mehreren der Ansprüche 1 bis 12, wobei eine Gruppe aus mindestens zwei Näpfchen besteht, welche dicht nebeneinander angeordnet sind, ohne dass sich die Außenränder der Näpfchen gegenseitig berühren, und wobei der Abstand der Näpfchen in der Gruppe zueinander geringer ist als der Abstand jedes der Näpfchen der Gruppe zu einem benachbarten Näpfchen außerhalb der Gruppe.

14. Verwendung gemäß einem oder mehreren der Ansprüche 1 bis 12, wobei eine Gruppe aus mindestens zwei Näpfchen besteht, welche nebeneinander so angeordnet sind, dass sich die Außenränder von jeweils mindestens zwei der Näpfchen der Gruppe an mindestens einem Punkt berühren, wobei sich die Außenränder von keinem der Näpfchen der Gruppe mit einem benachbarten Näpfchen außerhalb der Gruppe berühren.

15. Verwendung gemäß einem oder mehreren der Ansprüche 1 bis 12, wobei eine Gruppe aus mindestens zwei Näpfchen besteht, welche so angeordnet sind, dass sie sich teilweise überschneiden, wobei keines der Näpfchen der Gruppe ein benachbartes Näpfchen außerhalb der Gruppe berührt.

16. Verwendung gemäß einem oder mehreren der Ansprüche 13 bis 15, wobei eine Gruppe aus sechs oder sieben Näpfchen besteht, welche in einer hexagonalen Form angeordnet sind.

17. Verwendung gemäß Anspruch 16, wobei eine Gruppe aus sieben Näpfchen besteht, welche jeweils einen flachen Näpfchenboden und denselben Durchmesser aufweisen und in einer hexagonalen Form angeordnet sind.

18. Verwendung gemäß Anspruch 17, wobei alle Näpfchengruppen auf der Druckform aus sieben Näpfchen bestehen, welche jeweils einen flachen Näpfchenboden und denselben Durchmesser aufweisen und in einer hexagonalen Form angeordnet sind, und wobei die Näpfchengruppen sich in ihrer Tiefe unterscheiden.

19. Verwendung gemäß einem oder mehreren der Ansprüche 1 bis 18, wobei die Druckform Näpfchen aufweist, welche eine gleiche und/oder verschiedene Bodenform, einen gleichen und/oder verschiedenen Durchmesser und eine gleiche und/oder verschiedene Tiefe besitzen.

20. Verwendung gemäß einem oder mehreren der Ansprüche 1 bis 19, wobei die Druckform Näpfchen aufweist, welche in Gruppen angeordnet sind, und Näpfchen, welche nicht in Gruppen angeordnet sind.

21. Tiefdruckverfahren, bei welchem die Vertiefungen einer Druckform, welche aus einem flachen oder zylindrischen Körper mit einer metallischen oder keramischen Schicht besteht, die Vertiefungen in Form von Näpfchen aufweist, welche per Lasergravur hergestellt sind, mit einer Wasser und/oder ein organisches Lösemittel oder organisches Lösemittelgemisch in einer Menge von mindestens 35 Gewichtsprozent, bezogen auf das Gesamtgewicht der Druckfarbe, enthaltenden Druckfarbe befüllt und anschließend die überschüssige Farbe von der Oberfläche der Druckform entfernt wird, wonach die sich in den Näpfchen verbleibende Druckfarbe durch mechanisches Anpressen der Druckform an einen Bedruckstoff auf diesen übertragen und anschließend getrocknet und/oder ausgehärtet wird, wobei die Druckfarbe mindestens ein plättchenförmiges Effektpigment enthält und die Näpfchen auf der metallischen oder keramischen Oberfläche mindestens teilweise in Gruppen angeordnet sind, welche aus mindestens zwei und bis zu neun Näpfchen bestehen.

22. Tiefdruckverfahren gemäß Anspruch 21, wobei alle Näpfchen in Gruppen angeordnet sind.

23. Tiefdruckverfahren gemäß Anspruch 21 oder 22, wobei es sich bei der Druckform um eine Druckplatte oder einen Druckzylinder handelt.

24. Tiefdruckverfahren gemäß einem oder mehreren der Ansprüche 21 bis 23, wobei der Bedruckstoff ein Papier, eine Kartonage, eine Tapete, ein Laminat, ein Tissue-Material, Holz, Metall, eine polymere Folie, eine Metallfolie, ein Sicherheitsdruckerzeugnis oder ein Material ist, welches Bestandteile aus mehreren dieser Stoffe enthält, und wobei der Bedruckstoff optional elektrostatisch vorbehandelt und/oder mit einer Primärschicht versehen ist.

25. Tiefdruckverfahren gemäß einem oder mehreren der Ansprüche 21 bis 24, wobei das Effektpigment eine Dicke zwischen 0,01 und 5 µm, eine Länge bzw. Breite von 1 bis 500 µm und ein Aspektverhältnis von 2:1 bis 25000:1 aufweist.

26. Druckerzeugnis, hergestellt nach einem Tiefdruckverfahren gemäß einem oder mehreren der Ansprüche 22 bis 25.

## Claims

1. Use of printing forms which consist of a flat or cylindrical body with a metallic or ceramic coating which has recesses in the form of cells produced by laser engraving, for printing using printing inks pigmented with at least one flake-form effect pigment, and where the printing ink comprises a solvent which consists of water and/or organic solvents or organic solvent mixtures, in an amount of at least 35 per cent by weight, based on the total weight of the printing ink, in a gravure printing process, where at least some of the cells on the metallic or ceramic coating of the printing form are arranged in groups which consist of at least two and up to nine cells.

2. Use according to Claim 1, where the printing forms are printing plates or printing cylinders.

3. Use according to Claims 1 and 2, where the printing ink dries and/or cures at room temperature or at elevated temperature and/or by irradiation with UV light.

4. Use according to Claims 1 to 3, where the flake-form effect pigment is a pearlescent pigment, an interference pigment, a metal-effect pigment, a liquid-crystal pigment, a structured pigment or a mixture thereof.

5. Use according to Claim 4, where the effect pigment comprises a flake-form support with optionally at least one coating of a metal, metal oxide, metal oxide hydrate or mixtures thereof, a metal mixed oxide, suboxide or oxynitride, metal fluoride or a polymer.

6. Use according to Claim 4 or 5, where the effect pigment has a flake-form support comprising natural or synthetic mica, kaolin or another phyllosilicate, glass, calcium aluminium borosilicate, SiO₂, TiO₂, Al₂O₃, Fe₂O₃, polymer flakes, graphite flakes or metal flakes.

7. Use according to Claims 4 to 6, where the effect pigment has a flake-form support comprising mica, glass, calcium aluminium borosilicate, graphite, SiO₂, Al₂O₃ or aluminium and at least one coating selected from TiO₂, titanium suboxides, titanium oxynitrides, Fe₂O₃, Fe₃O₄, SnO₂, Sb₂O₃, SiO₂, Al₂O₃, MgF₂, ZrO₂, B₂O₃, Cr₂O₃, ZnO, CuO, NiO or mixtures thereof.

8. Use according to Claims 4 to 7, where the effect pigment has a thickness of between 0.01 and 5 µm, a length or width of 1 to 500 µm and an aspect ratio of 2:1 to 25,000:1.

9. Use according to one or more of Claims 1 to 8, where the individual cells have a circular cross section and a base which is located at a certain depth in the metallic coating of the printing form.

10. Use according to Claim 9, where the cells have a flat base which is formed essentially parallel to the surface of the printing form.

11. Use according to Claim 9, where the cells have a dome-shaped base.

12. Use according to one or more of Claims 9 to 11, where the cells have a diameter of 1 to 180 µm, a depth of 0.1 to 100 µm and a depth to diameter ratio of 0.1:2.

13. Use according to one or more of Claims 1 to 12, where a group consists of at least two cells which are arranged closely alongside one another without the outer edges of the cells touching one another, and where the separation of the cells in the group from one another is smaller than the separation of each of the cells in the group from an adjacent cell outside the group.

14. Use according to one or more of Claims 1 to 12, where a group consists of at least two cells which are arranged alongside one another in such a way that the outer edges of in each case at least two of the cells in the group touch at at least one point, where the outer edges of none of the cells in the group touch an adjacent cell outside the group.

15. Use according to one or more of Claims 1 to 12, where a group consists of at least two cells which are arranged in such a way that they partly overlap, where none of the cells in the group touches an adjacent cell outside the group.

16. Use according to one or more of Claims 13 to 15, where a group consists of six or seven cells which are arranged in a hexagonal shape.

17. Use according to Claim 16, where a group consists of seven cells which each have a flat cell base and the same diameter and are arranged in a hexagonal shape.

18. Use according to Claim 17, where all cell groups on the printing form consist of seven cells which each have a flat cell base and the same diameter and are arranged in a hexagonal shape, and where the cell groups differ in their depth.

19. Use according to one or more of Claims 1 to 18, where the printing form has cells which have the same and/or a different base shape, the same and/or a different diameter and the same and/or a different depth.

20. Use according to one or more of Claims 1 to 19, where the printing form has cells which are arranged in groups and cells which are not arranged in groups.

21. Gravure printing process in which the recesses of a printing form which consists of a flat or cylindrical body with a metallic or ceramic coating which has recesses in the form of cells produced by laser engraving are filled with a printing ink comprising water and/or an organic solvent or organic solvent mixture in an amount of at least 35 per cent by weight, based on the total weight of the printing ink, and the excess ink is subsequently removed from the surface of the printing form, after which the printing ink remaining in the cells is transferred to a print substrate by mechanical pressing of the printing form against the latter and is subsequently dried and/or cured, where the printing ink comprises at least one flake-form effect pigment, and at least some of the cells on the metallic or ceramic surface are arranged in groups which consist of at least two and up to nine cells.

22. Gravure printing process according to Claim 21, where all cells are arranged in groups.

23. Gravure printing process according to Claim 21 or 22, where the printing form is a printing plate or a printing cylinder.

24. Gravure printing process according to one or more of Claims 21 to 23, where the print substrate is a paper, a board, a wallpaper, a laminate, a tissue material, wood, metal, a polymeric film, a metal foil, a security print product or a material which comprises constituents of a plurality of these substances, and where the print substrate has optionally been electrostatically pretreated and/or provided with a primary coating.

25. Gravure printing process according to one or more of Claims 21 to 24, where the effect pigment has a thickness of between 0.01 and 5 µm, a length or width of 1 to 500 µm and an aspect ratio of 2:1 to 25,000:1.

26. Print product produced by a gravure printing process according to one or more of Claims 22 to 25.

## Revendications

1. Utilisation de supports d'impression qui sont constitués par un corps plat ou cylindrique muni d'un revêtement métallique ou en céramique qui comporte des évidements sous la forme de cellules produites par gravure laser, pour imprimer en utilisant des encres d'impression pigmentées à l'aide d'au moins un pigment d'effet sous forme de flocons, et dans laquelle l'encre d'impression comprend un solvant qui est constitué par de l'eau et/ou des solvants organiques ou des mélanges de solvants organiques, selon une quantité d'au moins 35% en poids, sur la base du poids total de l'encre d'impression, selon un processus d'impression par gravure, dans laquelle au moins certaines des cellules sur le revêtement métallique ou en céramique du support d'impression sont agencées selon des groupes qui se composent d'au moins deux et un maximum de neuf cellules.

2. Utilisation selon la revendication 1, dans laquelle les supports d'impression sont des plaques d'impression ou des cylindres d'impression.

3. Utilisation selon les revendications 1 et 2, dans laquelle l'encre d'impression sèche et/ou durcit à température ambiante ou à une température élevée et/ou par irradiation à l'aide d'une lumière UV.

4. Utilisation selon les revendications 1 à 3, dans laquelle le pigment d'effet sous forme de flocons est un pigment perlé un pigment d'interférence, un pigment d'effet métallique, un pigment à cristaux liquides, un pigment structuré ou un mélange afférent.

5. Utilisation selon la revendication 4, dans laquelle le pigment d'effet comporte un support sous forme de flocons avec, en option, au moins un revêtement en un métal, un oxyde de métal, un hydrate d'oxyde de métal ou des mélanges afférents, un oxyde de métal mixte, un sous-oxyde ou un oxynitrure, un fluorure de métal ou un polymère.

6. Utilisation selon la revendication 4 ou 5, dans laquelle le pigment d'effet comporte un support sous forme de flocons comprenant un mica naturel ou synthétique, un kaolin ou un autre phyllosilicate, in verre, un borosilicate de calcium-aluminium, SiO₂, TiO₂, Al₂O₃, Fe₂O₃, des flocons en polymère, des flocons en graphite ou des flocons en métal.

7. Utilisation selon les revendications 4 à 6, dans laquelle le pigment d'effet comporte un support sous forme de flocons comprenant un mica, un verre, un borosilicate de calcium-aluminium, un graphite, SiO₂, Al₂O₃ ou de l'aluminium et au moins un revêtement choisi parmi TiO₂, sous-oxydes de titane, oxynitrures de titane, Fe₂O₃, Fe₃O₄, SnO₂, Sb₂O₃, SiO₂, Al₂O₃, MgF₂, ZrO₂, B₂O₃, Cr₂O₃, ZnO, CuO, NiO ou des mélanges afférents.

8. Utilisation selon les revendications 4 à 7, dans laquelle le pigment d'effet présente une épaisseur entre 0,01 et 5 µm, une longueur ou largeur de 1 à 500 µm et un rapport d'aspect de 2:1 à 25000:1.

9. Utilisation selon une ou plusieurs des revendications 1 à 8, dans laquelle les cellules individuelles présentent une section en coupe circulaire et une base qui est située à une certaine profondeur dans le revêtement métallique du support d'impression.

10. Utilisation selon la revendication 9, dans laquelle les cellules comportent une base plane qui est formée essentiellement parallèlement à la surface du support d'impression.

11. Utilisation selon la revendication 9, dans laquelle les cellules comportent une base en forme de dôme.

12. Utilisation selon une ou plusieurs des revendications 9 à 11, dans laquelle les cellules présentent un diamètre de 1 à 180 µm, une profondeur de 0,1 à 100 µm et un rapport profondeur sur diamètre de 0,1 à 2.

13. Utilisation selon une ou plusieurs des revendications 1 à 12, dans laquelle un groupe est constitué par au moins deux cellules qui sont agencées à proximité les unes des autres dans la longueur sans que les bords externes des cellules ne se touchent les uns les autres et dans laquelle la séparation des cellules les unes des autres dans le groupe est plus petite que la séparation de chacune des cellules dans le groupe par rapport à une cellule adjacente à l'extérieur du groupe.

14. Utilisation selon une ou plusieurs des revendications 1 à 12, dans laquelle un groupe est constitué par au moins deux cellules qui sont agencées les unes par rapport aux autres dans la longueur de telle sorte que les bords externes dans chaque cas d'au moins deux des cellules dans le groupe se touchent en au moins un point, dans laquelle les bords externes d'aucune des cellules dans le groupe ne touchent une cellule adjacente externe au groupe.

15. Utilisation selon une ou plusieurs des revendications 1 à 12, dans laquelle un groupe est constitué par au moins deux cellules qui sont agencées de telle sorte qu'elles se chevauchent partiellement, dans laquelle aucune des cellules dans le groupe ne touche une cellule adjacente extérieure au groupe.

16. Utilisation selon une ou plusieurs des revendications 13 à 15, dans laquelle un groupe est constitué par six ou sept cellules qui sont agencées selon une forme hexagonale.

17. Utilisation selon la revendication 16, dans laquelle un groupe est constitué par sept cellules qui présentent chacune une base de cellule plane et le même diamètre et qui sont agencées selon une forme hexagonale.

18. Utilisation selon la revendication 17, dans laquelle tous les groupes de cellules sur le support d'impression sont constituées par sept cellules qui présentent chacune une base de cellule plane et le même diamètre et qui sont agencées selon une forme hexagonale, et dans laquelle les groupes de cellules diffèrent en termes de profondeur.

19. Utilisation selon une ou plusieurs des revendications 1 à 18, dans laquelle le support d'impression comporte des cellules qui présentent la même forme de base et/ou une forme de base différente, le même diamètre et/ou un diamètre différent et la même profondeur et/ou une profondeur différente.

20. Utilisation selon une ou plusieurs des revendications 1 à 19, dans laquelle le support d'impression comporte des cellules qui sont agencées selon des groupes et des cellules qui ne sont pas agencées selon des groupes.

21. Processus d'impression par gravure selon lequel les évidements d'un support d'impression qui sont constitués par un corps plat ou cylindrique avec un revêtement métallique ou en céramique qui comporte des évidements selon la forme de cellules produits au moyen d'une gravure laser sont remplis d'une encre d'impression qui comprend de l'eau et/ou un solvant organique ou un mélange de solvants organiques selon une quantité d'au moins 35% en poids, sur la base du poids total de l'encre d'impression, et l'encre en excès est ensuite enlevée de la surface du support d'impression, après quoi l'encre d'impression qui subsiste dans les cellules est transférée sur un substrat d'impression au moyen d'une pression mécanique du support d'impression contre ce substrat et est ensuite séchée et/ou durcie, dans lequel l'encre d'impression comprend un pigment d'effet sous forme de flocons, et au moins certaines des cellules sur la surface métallique ou en céramique sont agencées selon des groupes qui se composent d'au moins deux et un maximum de neuf cellules.

22. Processus d'impression par gravure selon la revendication 21, dans lequel toutes les cellules sont agencées selon des groupes.

23. Processus d'impression par gravure selon la revendication 21 ou 22, dans lequel le support d'impression est une plaque d'impression ou un cylindre d'impression.

24. Processus d'impression par gravure selon une ou plusieurs des revendications 21 à 23, dans lequel le substrat d'impression est un papier, un carton, un papier mural, un laminé, un matériau de tissu, du bois, un métal, un film polymérique, une feuille métallique, un produit d'impression de sécurité ou un matériau qui comprend des constituants d'une pluralité de ces substances et dans lequel le substrat d'impression a été en option prétraité électrostatiquement et/ou muni d'un revêtement primaire.

25. Processus d'impression par gravure selon une ou plusieurs des revendications 21 à 24, dans lequel le pigment d'effet présente une épaisseur entre 0,01 et 5 µm, une longueur ou largeur de 1 à 500 µm et un rapport d'aspect de 2:1 à 25000:1.

26. Produit d'impression élaboré au moyen d'un procédé d'impression par gravure selon une ou plusieurs des revendications 22 à 25.
